# EUROPÄISCHE PATENTSCHRIFT

(11) **EP 3 339 927 B1**
(45) Veröffentlichungstag und Bekanntmachung des Hinweises auf die Patenterteilung: **02.04.2025**
(21) Anmeldenummer: 17204544.5
(22) Anmeldetag: 30.11.2017
(51) Int. Cl.: G02B 6/44

(54) **ANSCHLUSSEINRICHTUNG UND GLASFASERVERTEILERKASTEN**
CONNECTING DEVICE AND GLASS FIBRE DISTRIBUTION BOX
DISPOSITIF DE CONNEXION ET BOÎTE DE DISTRIBUTION DE FIBRES DE VERRE

(30) Priorität: 23.12.2016 DE 102016125609
(43) Veröffentlichungstag der Anmeldung: 27.06.2018
(73) Patentinhaber: gabo Systemtechnik GmbH, 94559 Niederwinkling (DE)
(72) Erfinder: Geiger, Alexander, 94559 Niederwinkling (DE); Karl, Markus, 94327 Bogen (DE); Lederer, Roland, 94374 Schwarzach (DE)
(74) Vertreter: Schmid, Nils T.F.

(56) Entgegenhaltungen:
- EP-A1- 1 705 505
- WO-A1-2014/106609
- DE-T2- 69 303 137
- US-A1- 2005 053 341
- US-A1- 2008 253 730

## Beschreibung

Die Erfindung betrifft eine Einrichtung zum insbesondere fluiddichten Anschließen eines oder mehrerer Glasfaserkabel aufnehmender Kunststoff-Mikrorohre an einen Glasfaserverteilerkasten, sowie einen Glasfaserverteilerkasten mit einer solchen Einrichtung.

Der erfindungsgemäße Glasfaserverteilerkasten kann als Datensignalübertragungseinheit verstanden werden, wie sie beispielsweise in der Telekommunikationstechnik, Datenmanagementtechnik, etc. eingesetzt werden soll. Im Besonderen betrifft die Erfindung Glasfaserverteilermodule oder -kästen, die in der Netzwerkebene 3 für den Straßenverteiler oder der Netzwerkebene 4 für den Hausverteiler eingesetzt werden soll. In den letzten Jahren gab es eine deutliche Entwicklung von Schutzrohren für Glasfaserkabel, welche unterirdisch bis zu einer Hauseinheit oder einem straßenseitigen Verteilerkasten verlegt werden. Diese Schutzrohre sind eigenstabil und bewahren ihre kreiszylindrische Form selbst bei hohen Drucklasten auf dem Mikrorohr. Insofern unterscheiden sich die Schutzrohre deutlich von schlauchförmigen und flexiblen Umhüllungen.

Ein Glasfaserverteilerkasten auf dem Gebiet der Telekommunikationstechnik ist aus US 9,213,159 B2 bekannt, bei dem ein kastenförmiges Gehäuse des Glasfaserverteilerkastens mehrere schnabelförmige sich innenseitig verjüngende Anschlusselemente aufweist, die ein Glasfaserummantelungsrohr empfangen soll. Im axialen Anschluss an das Anschlusselement ist ein Glasfaser-Mehrkanalblock zum Durchführen der einzelnen Glasfasern vorgesehen. Der Mehrkanalblock sowie der schnabelförmige Anschluss sind separate Bauteile am Wanddurchgang des Glasfaserverteilerkastens eingesetzt. Bei diesem Konzept der Anbindung von Schutzrohren für Glasfaserkabel zeigte es sich von Nachteil, dass der Verteilerkasten nicht ohne weiteres auf unterschiedliche Rohrdurchmesser anpassbar ist. Zudem ist der Montageaufbau aufgrund der Vielzahl von Bauteilen komplex und kostenintensiv. Schließlich bedarf es einer zusätzlichen Arretierung der Mikrorohre insbesondere an der Außenseite des Glasfaserverteilerkastens, um ein unabsichtliches Herausziehen des Mikrorohrs aus dem schnabelförmigen Anschlusselement zu vermeiden.

Ein weiterer Glasfaserverteilerkasten ist aus US 9,075,220 B2 bekannt, bei dem ein Anschluss eines Schutzrohrs für Glasfaserkabel mit einem an dem Ende jedes Schutzrohrs anzubringenden, rohrindividuellen Anschlusskopfstück realisiert ist, das in formkomplementäre Einlegekanäle in einem Montageblock quer zur axialen Längsrichtung des Schutzrohres eingesetzt werden kann. Bei dieser Ausgestaltung muss bei unterschiedlich dimensionierten Schutzrohren der gesamte Montageblock ausgetauscht werden. Zudem ist der Produktionsaufwand für die Anschlusselemente aufgrund der Hinzufügung von rohrindividuellen Anschlusskopfstücken an dem Ende des Schutzrohres notwendig.

EP 1 316 829 A2 offenbart einen Glasfaserverteilerkasten als Netzwerkanschlussstelle, bei dem ein Verteilungskabel mittels einer Deckel-Basis-Verklemmung befestigt wird. Mit dieser Ausgestaltung können hohe Zugkräfte von dem Kabelanschluss nicht aufgenommen werden, wodurch die Gefahr besteht, dass von ungeübtem Bedienpersonal die Verteilungskabel und damit die Glasfaserleitungen beschädigt werden können.

WO 2014/106609 A1 offenbart einen Endverbinder, der einen röhrenförmigen Körper umfasst, der einen Kanal mit einem Aufnahmeabschnitt zur Aufnahme eines Endabschnitts einer Röhre und einem Abschnitt begrenzt, durch den ein in der Röhre enthaltenes optisches Kabel austritt, wobei der Aufnahmeabschnitt mit einem Element zum Einhaken der Röhre und einem ringförmigen Hauptdichtelement versehen ist.

EP 1 705 505 A1, US 2005/053341 A1, US 2008/253730 A1 und DE 693 03 137 T2 stellen weitere Druckschriften im Stand der Technik dar.

Es ist Aufgabe der Erfindung, die Nachteile des Standes der Technik zu überwinden, insbesondere eine flexible Anschlusseinrichtung für einen Glasfaserverteilerkasten bereitzustellen, bei dem einerseits zumindest Spritzdichtungsvoraussetzungen insbesondere gemäß einschlägigen Vorschriften für Glasfaserverteilerkästen erfüllt sind, andererseits eine Feststellung der Rohre mit Zugentlastung bereitgestellt wird, ohne den Fertigungsaufwand für die Anschlusstechnik und den Glasfaserverteilerkasten zu erhöhen, wobei insbesondere die Flexibilität bei Belegung der Anschlüsse im Hinblick auf die Dimensionierung der Mikrorohre besteht oder die Fertigung der Anschlusseinrichtung vereinfacht ist.

Diese Aufgabe wird durch die Merkmale von Anspruch 1 gelöst. Danach ist eine Einrichtung zum insbesondere fluiddichten Anschließen ein oder mehrerer Glasfaserkabel aufnehmender Kunststoff-Mikrorohre an einem Glasfaserverteilerkasten vorgesehen. Die Anschlusseinrichtung erlaubt ein lösbares Feststellen und Freigeben der jeweiligen Mikrorohre ohne die Anschlusseinrichtung selbst, Teile davon oder das Mikrorohr verletzen zu müssen. Die Anschlusseinrichtung soll insbesondere einen Flüssigkeitseintritt über die Dichtungsmenge zwischen der Mikrorohraußenseite und der daran anliegenden Anschlussfläche der Anschlusseinrichtung vermeiden. Die mehreren Kunststoff-Mikrorohre sind starre Mikrorohre mit einem Durchmesser zwischen 2 mm und 50 mm, vorzugsweise 3 mm bis 20 mm, insbesondere 6 mm bis 10 mm, wobei abhängig von dem Durchmesser eine Wandstärke von wenigstens 1 mm bis 10 mm, vorzugsweise 1,5 mm bis 5 mm, vorzusehen ist, um die starre Rohrstruktur zu bilden. Im Gegensatz zu Schutzschläuchen ist das Kunststoff-Mikrorohr starr, insbesondere an dem kreiszylindrischen Innenquerschnitt, und wenn überhaupt, nur in elastischer Weise verformbar. Eine plastische flexible Deformation des starren Mikrorohrs ist nicht vorgesehen. Vielmehr sind die Mikrorohre derart starr ausgeführt, dass sie bei einer Druck- und Zugbelastung formstabil und knickfrei insbesondere unter Beibehaltung des kreisförmigen Querschnitts, bleiben. Ein Mikrorohr kann hohe Radialdrücke ertragen, ohne dass eine plastische Deformation einhergeht. Wird das Mikrorohr über der Lastgrenze belastet und plastisch deformiert, so verliert das Mikrorohr seine Schutzwirkung bezüglich der Ertragung von mechanischem Druck und der Bereitstellung einer Fluiddichtung.

Die erfindungsgemäße Anschlusseinrichtung soll dazu dienen, mehrere getrennte Mikrorohre, die jeweils ein oder mehrere Glasfaserkabel ummanteln oder umgeben, über eine einzige Trägerstruktur, an der die mehreren Mikrorohre eingeführt werden, an den Glasfaserverteilerkasten anzuschließen. Der Glasfaserverteilerkasten hat hierzu ein Gehäuse, das an seinen Seitenwänden einen oder mehrere Durchgänge aufweist, über den die jeweiligen von dem Mikrorohr getragenen optischen Glasfasern ins Innere des Glasfaserverteilerkastens gelangen sollen. Im Inneren des Glasfaserverteilerkastens sind Signaldaten be- und verarbeitende Bauelemente enthalten, die die Glasfasersignale weiterverarbeiten und/oder weiterleiten können.

Vorzugsweise sollen über die erfindungsgemäße Anschlusseinrichtung zwei Mikrorohre, drei Mikrorohre, vier Mikrorohre, fünf Mikrorohre, sechs Mikrorohre, acht Mikrorohre, zehn Mikrorohre, zwölf Mikrorohre, etc., anschließbar sein indem eine einzige Tragestruktur insbesondere aus Kunststoff mit entsprechender Anzahl von Anschlusskanälen vorgesehen ist.

Die erfindungsgemäße Anschlusseinrichtung hat einen Tragkörper, der insbesondere aus Kunststoff, wie einem Duroplast oder einem Thermoplast, gefertigt, vorzugsweise gespritzt, ist. Der Tragkörper ist zum Montieren und Demontieren an dem Glasfaserverteilerkasten lösbar anbringbar. Es sei klar, dass der Tragkörper auch einstückig mit dem Glasfaserverteilerkasten hergestellt sein kann, allerdings sei es bevorzugt, dass der Tragkörper als eigenständige Struktur in eine Öffnung in der Wand des Glasfaserverteilerkastens eingesetzt wird, wobei eine einfache lösbare Demontage des Tragkörpers ebenfalls bevorzugt ist. Des Weiteren hat der Tragkörper mehrere Kanäle oder Anschlusskanäle, die dazu ausgelegt, insbesondere dimensioniert, sind, jeweils ein Mikrorohr aufzunehmen. Erfindungsgemäß ist in dem von dem Material des Tragkörpers begrenzten Kanal zum Aufnehmen des Mikrorohrs eine jeweils in einem Kanal angeordnete zugkraftaufnehmende Klemmeinrichtung zum Festlegen des Mikrorohres an dem Tragkörper vorgesehen. Die Klemmeinrichtung soll dazu ausgelegt sein, ausschließlich an dem Mikrorohr angreifende Zugkräfte aufzunehmen, um ein Herausziehen des Mikrorohrs aus dem Anschlusskanal zu vermeiden, und wobei sie dazu ausgelegt ist, Druckkräfte, die auf das Mikrorohr wirken und ein Verschieben in das Innere des Glasfaserverteilerkastens bewirken, zuzulassen. Vorzugsweise ist in jedem Kanal genau eine Klemmeinrichtung zum Halten des Mikrorohres an einem Tragkörper vorgesehen. Die Klemmeinrichtung dient insbesondere dazu, ein ungewolltes Herausziehen des Mikrorohres, also Trennen des Mikrorohres, von dem Tragkörper zu vermeiden. Die Klemmeinrichtung ist des Weiteren insbesondere mikrorohrindividuell dimensioniert. Jede Mikrorohrdimensionierung kann beispielsweise mit einem Außendurchmesser von 3 mm, 4 mm, 5 mm, 6 mm, 7 mm, 8 mm, 10 mm, 20 mm, 30 mm, 40 mm, 50, mm etc. eine eigene Klemmeinrichtung besitzen, welche in einen bereits bestehenden Anschlusskanal eingesetzt werden kann. Auf diese Weise kann der Tragkörper mit unterschiedlichen Klemmeinrichtungen für unterschiedliche Mikrorohrgrößen zusammengestellt werden.

Außerdem ist erfindungsgemäß in einem, insbesondere jedem mit einer Klemmeinrichtung ausgestatteten Anschlusskanal im Tragkörper, mit einer separaten Dichtung versehen, die dazu dient, die Außenseite des Mikrorohres gegenüber dem Tragkörper, insbesondere der Innenseite des Kanals, abzudichten. Die Dichtung, die beispielsweise als O-Ring ausgeführt sein kann, ist als zur Klemmeinrichtung separates Bauelement in den gemeinsamen Anschlusskanal des gemeinsamen Tragkörpers angeordnet, so dass sowohl die Klemmeinrichtung als auch die Dichtung gemeinsam mit dem Tragkörper an den Glasfaserverteilerkasten montiert und abgenommen werden kann.

Vorzugsweise ist die Dimensionierung des Anschlusskanals des Tragkörpers auf die insbesondere genormten Außendurchmesser des Mikrorohres abgestimmt. Zum Anschließen von unterschiedlich dimensionierten Mikrorohren können unterschiedlich dimensionierte Anschlusskanäle in dem Tragkörper eingebracht sein. Beispielsweise kann der Anschlusskanal eine große Einheitsgröße haben, so dass sich die Dimensionsanpassung durch die Ausgestaltung der mikrorohrindividuellen Klemmeinrichtung realisiert ist. Die Klemmeinrichtung und die Dichtung sind vorzugsweise mikrorohrindividuell ausgestaltet und insbesondere als separate Bauelemente an dem Tragkörper befestigt.

Mit der Erfindung gelingt es, eine einfache und flexible Gestaltung eines Glasfaserverteilerkastenanschlusses für Mikrorohre zu schaffen, die einen normierbaren Aufbau für unterschiedliche Mikrorohrdimensionierungen auf einfache Weise zulässt, wobei eine Mikrorohr-Abzugssicherung sowie Fluiddichtigkeit gewährleistet sind. Mit der Anschlusseinrichtung für Mikrorohrstrukturen ist ein geordneter und für eine ungeübte Montageperson einfacher Anschluss von Mikrorohren und damit eine mechanische Sicherung der Glasfaser in den Verteilerkasten möglich, ohne Gefahr zu laufen, den Verteilerkasten, das Mikrorohr oder die Glasfaserkabel zu verletzen. Die Erfindung nutzt die hohe Stabilität der Mikrorohre zum Schutz für die Glasfaserkabel selbst beim Anschluss an den Glasfaserverteilerkasten.

Bei der Erfindung sind der Tragkörper, die Klemmeinrichtung und die Dichtung für jeweils einen Anschlusskanal des Tragkörpers als Montageeinheit an dem Glasverteilerkasten anbringbar und abnehmbar, ohne die Position und/oder die Funktionsweise der Klemmeinrichtung und der Dichtung ändern oder betätigen zu müssen.

Bei einer bevorzugten Ausführung der Erfindung ist der Tragkörper entsprechend eines Gleitschuhs verschieblich gegenüber dem Verteilerkasten montierbar. Dabei wird der Tragkörper an dem Wanddurchgang des Verteilerkastens angesetzt und dann mit einer insbesondere ausschließlich translatorischen Montageschiebebewegung die Montageendposition translatorisch verschoben. Hierzu kann eine Außenseite des Tragkörpers mit einem Montageprofil, insbesondere eine Führungsrille oder ein Führungsrillenpaar auf gegenüberliegenden Seiten, zum translatorischen Einschieben des Tragkörpers längs einer entsprechend geformten Wandöffnung des Glasverteilerkastens geformt sein. Hierzu kann die Außenseite des Tragkörpers eine Führungsnut aufweisen, in die der Wandrand des Glasfaserverteilerkastens gleitend eingreifen kann. Vorzugsweise definiert das Montageprofil an der Außenseite des Tragkörpers eine bestimmte Montageeinschieberichtung relativ zu dem Glasverteilerkasten. Die Montageeinschieberichtung kann quer, insbesondere senkrecht, zur Kanallängsrichtung liegen, längs der das Mikrorohr in den Anschlusskanal zum Fixieren an den Tragkörper durch die Klemmeinrichtung drückend eingeschoben wird.

Die Klemmeinrichtung kann insbesondere dadurch ausgebildet sein, dass sie von einem unbetätigten und unbelegten Passivzustand in einen zugaufnehmenden Klemmzustand nur dadurch gebracht wird, dass das jeweilige Mikrorohr in deren Längsrichtung in den die jeweilige Klemmeinrichtung aufnehmenden Anschlusskanal in Richtung des Inneren des Glasfaserverteilerkastens eingeschoben wird. Bei Erreichen eines bestimmten Einschiebepunkts wird der Klemmeffekt der Klemmeinrichtung aktiviert. Nur einer zusätzlichen Freigabeeinrichtung gelingt es, die Blockade der Klemmeinrichtung, welche ein Herausziehen des Mikrorohrs in Richtung der Außenseite des Glasfaserverteilerkastens verhindert.

Bei einer Weiterbildung der Erfindung hat der Tragkörper zusätzlich zu dem Montageprofil zum translatorischen Einschieben des Tragkörpers relativ zum Glasfaserverteilerkasten in die Montageendposition des Tragkörpers ein Dichtungs-Aufnahmeprofil an dessen Außenseite. In dem Dichtungs-Aufnahmeprofil ist eine Außendichtung, wie ein O-Ring, angeordnet, um den insbesondere umlaufenden Kontaktbereich zwischen dem Glasfaserverteilerkasten und dem Tragkörper abzudichten. Dabei kann das Dichtungs-Aufnahmeprofil und/oder die Dichtung derart angeordnet sein, dass die Dichtung erst dann einen umlaufenden Dichtungskontakt mit dem Glasfaserverteilerkasten bildet, wenn der Tragkörper in die Montageendposition eingeschoben wurde.

Bei einer bevorzugten Ausführung der Erfindung hat der Tragkörper im Wesentlichen eine Quaderblockform, die parallel sich gegenüberliegende Seitenflächen aufweist, in welche das Montageprofil und gegebenenfalls das Dichtungs-Aufnahmeprofil ausgebildet sind.

Die Klemmeinrichtung ist als separates Bauelement jeweils in einem Kanal eingesetzt, insbesondere verpresst. Die Klemmeinrichtung hat einen lösbaren Verstellmechanismus, der eine Verankerung umfasst, welche ein Einschieben des Mikrorohres in das Innere des Glasfaserverteilerkastens ungehindert zulässt, indem insbesondere die Verankerung an der Außenseite des Mikrorohres entlanggleitet, wobei bei eine Betätigung des Mikrorohres in der entgegengesetzten axialen Zugrichtung, nämlich aus dem Glasfaserverteilerkasten heraus, die Verankerung widerhakend mit der Außenseite des Mikrorohres in Eingriff kommt. Auf diese Weise ist das Mikrorohr in Zugrichtung von dem Glasfaserverteilerkasten weg fixiert.

Bei der Erfindung hat die Klemmeinrichtung eine in jeweils einen Kanal des Tragkörpers vorzugsweise formangepasst eingesetzte, insbesondere eingepresste, Hülsenstruktur. Die Hülsenstruktur ist vorzugsweise aus Metall, wie Edelstahl oder Messing, ausgeführt. Auch andere Metalle sind geeignet, sofern sie die genannten Funktionsaspekte erfüllen. Die Hülsenstruktur ist derart dimensioniert, dass das jeweils passende Mikrorohr mit Spiel in das Innere des Glasfaserverteilerkastens eingeschoben werden kann. Die Hülsenstruktur ist an deren Innenseite mit der Verankerung versehen, die vorzugsweise einstückig mit der Hülsenstruktur geformt, insbesondere gefertigt ist. Die Verankerung lässt ein Einschieben des jeweils passenden Mikrorohres nachgebend zu und umfasst erfindungsgemäß mehrere elastisch verformbare radial nach innen ragende Krallen auf, welche bei der Betrachtung radial nach innen ins Innere des Glasfaserverteilerkastens geneigt sind, um sich bei einer Zugbewegung des in die Klemmeinrichtung eingeschobenen Mikrorohres in radialer Richtung krallend aufzustellen, um ein axiales Feststellen des Mikrorohres in Zugrichtung nach außen sicherzustellen.

Bei einer Weiterbildung der Erfindung hat der lösbare Feststellmechanismus zudem eine Freigabeeinrichtung, die in einem Betätigungszustand das Mikrorohr von dem Feststellmechanismus für ein ungehindertes axiales Verschieben des Mikrorohres auch in Richtung zur Außenseite des Glasfaserverteilerkastens freigibt. Vorzugsweise hat die Freigabeeinrichtung ein gegenüber einer Hülsenstruktur der Feststelleinrichtung teleskopartig verstellbares Betätigungsglied, das bei axialem Verschieben im Betätigungszustand derart auf die Feststelleinrichtung einwirkt, dass deren Eingriff über dem Mikrorohr zu dessen ungehindertem axialen Verschieben freigegeben ist.

Bei einer bevorzugten Ausführung der Erfindung ist das Betätigungsglied in der Hülsenstruktur der Feststelleinrichtung eine separate Innenhülse, die gegenüber der Hülsenstruktur axial teleskopartig verschieblich ist. Die Innenhülse ist in axialer Kanalrichtung zur Außenseite des Glasfaserverteilerkastens durch die Verankerung, insbesondere durch die mehreren elastisch verformbaren Krallen der Feststelleinrichtung, vorgespannt, so dass insbesondere die Innenhülse gegen einen Axialanschlag, der an der Innenseite der Hülsenstruktur in unbetätigtem Zustand anliegt.

Des Weiteren betrifft die Erfindung einen Glasfaserverteilerkasten mit einem geschlossenen Gehäuse, insbesondere einem fluiddicht abgeschlossenen Gehäuse, das vorzugsweise aus einem Kunststoff gefertigt, insbesondere gespritzt ist. Das Gehäuse hat insbesondere eine quaderblockförmige Außengestalt und wenigstens einen Durchgang in einer Gehäusewand. Es können auch mehrere Durchgänge in der Gehäusewand ausgebildet sein, wobei der Durchgang annähernd durch die gesamte Ausdehnung der Gehäusewand des quaderförmigen Gehäuses ausgebildet sein kann. In dem Durchgang ist die oben beschriebene erfindungsgemäße Einrichtung zum Anschließen von Mikrorohren lösbar eingesetzt, so dass der wenigstens eine Durchgang vollständig durch den Tragkörper ausgefüllt ist und lediglich die Kanäle vorliegen, die mit Mikrorohren bestückt werden können. Bleibt einer der Kanäle mikrorohrfrei, kann ein entsprechender Dichtpfropfen den jeweiligen Kanal verschließen.

Es sei klar, dass mehrere Durchgänge in einer oder mehreren der Gehäusewänden eingebracht sein kann, wobei die Tragkörper der erfindungsgemäßen Anschlusseinrichtungen nicht gleich dimensioniert sein müssen.

Mit der Erfindung wird erreicht, eine besonders flexible und einfach zu betätigende Anschlusseinrichtung für den Anschluss von Mikrorohren zu schaffen, die als Schutz für die empfindlichen Glasfaser dienen und üblicherweise mit Glasfasern bestückt werden, damit diese weder durch den Verlegevorgang noch über den verlängerten Zeitraum nicht beschädigt werden. Mikrorohre sind insbesondere von Interesse, als diese zusammen mit den Glasfaserbündeln wie auch mit Einzelglasfasern gemeinsam extrudiert werden können, wodurch eine Mikrorohr-Glasfasergesamtstruktur in einem einzelnen Herstellungsschritt realisiert ist. Für diese Mikrorohre kann der erfindungsgemäße Gegenstand als Standard fungieren, um ein sicheres und schonendes Anschließen auch für ungeübtes Bedienpersonal zu gewährleisten. Zudem erreicht die Erfindung selbst bei bestehenden Glasfaserverteilerkästen, insbesondere deren Gehäusestruktur und bestehenden Gehäusedurchgängen kompatible Anschlussmöglichkeiten zu schaffen, ohne die Gehäusestruktur des bestehenden Glasfaserverteilerkastens verändern zu müssen. Die Erfindung erreicht, dass selbst für unterschiedlichste Mikrorohrabmessungen der gleiche Aufbau für die Anschlusseinrichtungselemente benutzt werden kann, ohne Einbußungen hinsichtlich der Festigkeit (Zugfestigkeit) und Fluiddichtigkeit hinnehmen zu müssen. Besonders vorteilhaft ist die einfache Montage der erfindungsgemäßen Anschlusseinrichtung an den Glasfaserverteilerkasten, weil die erfindungsgemäße Anschlusseinrichtung sämtliche Anschluss- und Dichtungskomponenten in sich vereint und nicht getrennt montiert werden müssen.

Beispiele für die Kombination von Glasfaserverteilerkasten mit dem jeweiligen Tragkörper der erfindungsgemäßen Anschlusseinrichtung sind in den Figuren dargestellt.

Weitere Eigenschaften, Vorteile und Merkmale der Erfindung sind in der folgenden Beschreibung von bevorzugten Ausführungen der Erfindung anhand der beiliegenden Zeichnungen deutlich gemacht, in denen zeigen:
- Fig. 1a: eine Querschnittsansicht einer erfindungsgemäßen Anschlusseinrichtung mit einem in den Kanalanschluss einzuschiebenden Mikrorohr, das vor der Anschlusseinrichtung positioniert ist;
- Fig. 1b: eine Querschnittsansicht der erfindungsgemäßen Anschlusseinrichtung nach Fig. 1a, wobei das Mikrorohr fluiddicht angeschlossen ist;
- Fig. 1c: eine Querschnittsansicht der erfindungsgemäßen Anschlusseinrichtung nach Fig. 1a und 1b, wobei eine Freigabeeinrichtung der erfindungsgemäßen Anschlusseinrichtung betätigt ist, um das Mikrorohr wieder beschädigungsfrei von der Anschlusseinrichtung zu lösen;
- Fig. 2a: eine perspektivische Ansicht eines erfindungsgemäßen Tragkörpers für die in Fig. 1a bis 1c dargestellte Anschlusseinrichtung;
- Fig. 2b: eine Querschnittsansicht des Tragkörpers nach Fig. 2a;
- Fig. 2c: eine Seitenansicht des Tragkörpers gemäß Fig. 2a und 2b;
- Fig. 3: eine perspektivische Ansicht eines offenen Glasverteilerkastens mit mehreren (5) Wanddurchgängen für die erfindungsgemäße Anschlusseinrichtung, die einen Tragkörper gemäß Fig. 2a bis 2c aufweist, wobei einer von zwei Anschlusskanälen mit einem Mikrorohr belegt ist;
- Fig. 4a: eine perspektivische Ansicht einer weiteren Ausführung des Tragkörpers für eine erfindungsgemäße Anschlusseinrichtung mit drei möglichen Kanalanschlüssen;
- Fig. 4b: eine Querschnittsansicht des Tragkörpers gemäß Fig. 4a;
- Fig. 4c: eine Seitenansicht des Tragkörpers gemäß Fig. 4a und 4b;
- Fig. 5: eine perspektivische Ansicht eines Glasfaserverteilerkastens mit mehreren (5) Wanddurchgängen für die erfindungsgemäße Anschlusseinrichtung, welche einen Tragkörper gemäß Fig. 4a bis 4c aufweist, wobei einer von drei Anschlusskanälen mit einem Mikrorohr belegt ist;
- Fig. 6a: eine perspektivische Ansicht einer weiteren Ausführung des Tragkörpers für eine erfindungsgemäße Anschlusseinrichtung mit vier möglichen Kanalanschlüssen;
- Fig. 6b: eine Querschnittsansicht des Tragkörpers gemäß Fig. 6a;
- Fig. 6c: eine Seitenansicht des Tragkörpers gemäß Fig. 6a und 6b;
- Fig. 7: eine perspektivische Ansicht eines erfindungsgemäßen Glasfaserverteilerkastens mit mehreren (5) Wanddurchgängen für die erfindungsgemäße Anschlusseinrichtung, welche einen Tragkörper gemäß Fig. 6a bis 6c umfasst und zwei von vier Anschlusskanälen mit einem Mikrorohr belegt sind;
- Fig. 8a: eine perspektivische Ansicht einer weiteren Ausführung des Tragkörpers für eine erfindungsgemäße Anschlusseinrichtung;
- Fig. 8b: eine Querschnittsansicht des Tragkörpers gemäß Fig. 8a;
- Fig. 8c: eine Seitenansicht des Tragkörpers gemäß Fig. 8a und 8b;
- Fig. 9: eine perspektivische Ansicht eines erfindungsgemäßen Glasfaserverteilerkastens mit mehreren (5) Wanddurchgängen, von denen einer mit einer erfindungsgemäßen Anschlusseinrichtung belegt ist, die einen Tragkörper gemäß Fig. 8a bis 8c umfasst, wobei zwei von vier Anschlusskanälen mit einem Mikrorohr angeschlossen sind;
- Fig. 10a: eine perspektivische Ansicht einer weiteren Ausführung des Tragkörpers für eine erfindungsgemäße Anschlusseinrichtung mit einer Vielzahl von versetzt zueinander angeordneten Kanaleingängen;
- Fig. 10b: eine Querschnittsansicht des Tragkörpers gemäß Fig. 10a;
- Fig. 10c: eine Seitenansicht des Tragkörpers gemäß Fig. 10a und 10b;
- Fig. 11: eine perspektivische Ansicht eines erfindungsgemäßen Glasfaserverteilerkastens mit zwei Wanddurchgängen und einer eingesetzten erfindungsgemäßen Anschlusseinrichtung, welche einen Tragkörper gemäß Fig. 10a bis 10c umfasst, wobei zwei von den Anschlusskanälen mit jeweils einem Mikrorohr belegt sind;
- Fig. 12a: eine perspektivische Ansicht einer weiteren Ausführung des Tragkörpers für eine erfindungsgemäße Anschlusseinrichtung mit mehreren in Reihen und Spalten angeordneten Anschlusskanälen;
- Fig. 12b: eine Querschnittsansicht des Tragkörpers gemäß Fig. 12a;
- Fig. 12c: eine Seitenansicht des Tragkörpers gemäß Fig. 12a und 12b; und
- Fig. 13: eine perspektivische Ansicht eines erfindungsgemäßen Glasfaserverteilerkastens mit zwei Wanddurchgängen, von denen einer mit einer erfindungsgemäßen Anschlusseinrichtung belegt ist, die einen Tragkörper gemäß Fig. 12a bis 12c aufweist, wobei zwei der Anschlusskanäle mit einem Mikrorohr belegt sind.

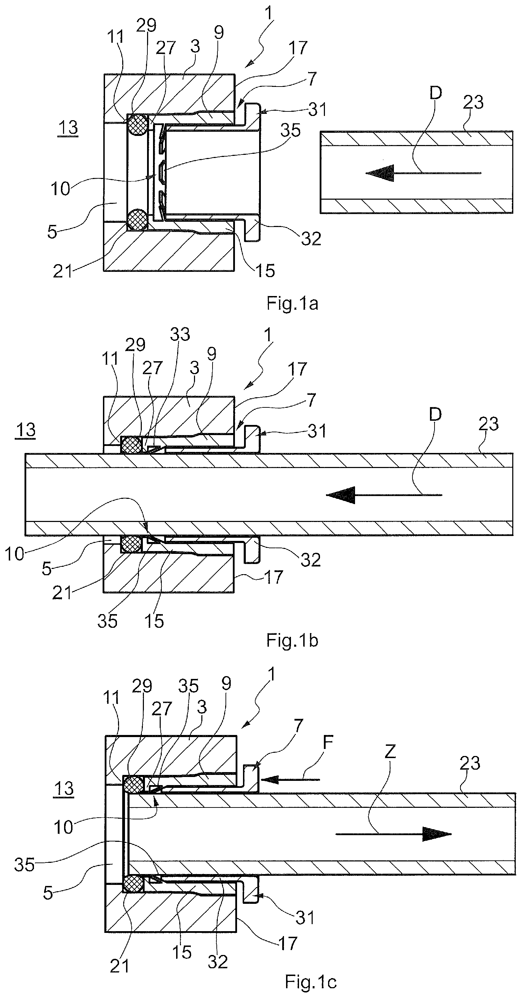

In Fig. 1a bis 1c ist die erfindungsgemäße Anschlusseinrichtung im Allgemeinen mit der Bezugsziffer 1 versehen, wobei unterschiedliche Betriebszustände für die Anschlusseinrichtung dargestellt sind. Die Anschlusseinrichtung 1 ist in Fig. 1a bis 1c ohne den Glasfaserverteilerkasten dargestellt, an dem die Anschlusseinrichtung 1 einzusetzen ist. Es sei klar, dass die erfindungsgemäße Anschlusseinrichtung 1 als separates Bauelement hergestellt werden kann und auch als austauschbare Lagerware vorrätig sein kann, um verschiedene Mikrorohre und an unterschiedlichen Verteilerkästen anschließen zu können.

In Fig. 1a bis 1c ist ein Tragkörper schematisch als Quader mit der Bezugsziffer 3 angedeutet. Der Tragkörper 3 ist aus Kunststoff (Duroplast) hergestellt und wird in den folgenden Figuren in unterschiedlicher Ausführung näher beschrieben. Der Tragkörper 3 hat im Allgemeinen mehrere Anschlusskanäle 5, von denen einer in Fig. 1a bis 1c dargestellt ist. In dem Kanal 5 ist zum einen ein Feststellmechanismus 7 und zum anderen eine Dichtung 29 befestigt. Sowohl die Dichtung 29 als auch der Feststellmechanismus 7 sind als funktional getrennte Bauteile ausschließlich von dem Tragkörper gehalten, so dass deren Struktur nicht mit dem Gehäuse oder sonstigen Bestandteilen des Glasfaserverteilerkastens zusammenwirken. Wird der Tragkörper 3 aus dem Glasfaserverteilerkasten entnommen, werden sowohl der Feststellmechanismus 7 als auch die Dichtungseinrichtung 29 mitdemontiert, ohne diese betätigen zu müssen.

Der Feststellmechanismus 7 umfasst eine äußere Hülse 9, die in einer Übergangs- oder Presspassung bezüglich der Kanalabmessung ausgestaltet ist.

Wie in Fig. 1a bis 1c ersichtlich ist, umfasst die Innenseite des Anschlusskanals 5 einen Axialabsatz 11, der dem Inneren 13 des nicht näher dargestellten Glasfaserverteilerkastens zugewandt ist.

Der Feststellmechanismus 7 hat eine Feststelleinrichtung 10, die an der äußeren Hülse 9 beweglich befestigt ist. Die äußere Hülse 9 ist vollständig in dem Anschlusskanal 5 versenkt, weswegen ein außenseitiges Ende der Hülse 9 mit einer Stirnseite 17 des Tragkörpers 3 zusammenfällt. Zwischen dem Axialabsatz 11 und dem Inneren 13 des Glasfaserverteilerkastens zugewandten Ringende der Hülse 9 ist ein Aufnahmeraum, insbesondere eine Aufnahmerille, ausgebildet, in dem eine Dichtung 29 insbesondere in Form eines O-Rings eingesetzt ist. Der O-Ring steht innenseitig derart radial vor, dass er dichtend mit der Anschlussseite des eingeschobenen Mikrorohrs 23 dichtend in Eingriff kommt.

Die äußere Hülse 9 umfasst an seinem dem Inneren 13 des Glasfaserverteilerkastens zugewandten Ende einen radial vorspringenden Montageabsatz 27, der später noch erläutert wird.

Zusätzlich umfasst der Feststellmechanismus 7 eine bezüglich der äußeren Hülse 9 axial verschiebbliche Freigabeeinrichtung 31 (eine Verschieberichtung F) in Form einer verschieblich gelagerten Betätigungsinnenhülse 32, die teleskopisch innenseitig der äußeren Hülse 9 axial einschiebbar ist. Damit die Betätigungsinnenhülse in axialer Richtung nicht aus der äußeren Hülse 9 herausziehbar ist, ist ein nicht näher dargestellter Radialvorsprung vorgesehen, der mit der Innenseite der Hülsenstruktur 15 verhakend in Eingriff kommt.

Die Feststelleinrichtung 10 basiert auf dem Funktionsprinzip einer widerhakenden Verankerung 33, um das Mikrorohr 23 nur in einer Axialrichtung festzusetzen. Die Verankerung 33 umfasst mehrere plattenförmige, an der Betätigungsinnenhülse 32 elastisch schwenkbare angelenkte Krallen 35, die in Umfangsrichtung an der Innenseite der äußeren Hülse 9 elastisch angelenkt befestigt sind und, wie in Fig. 1a dargestellt, im unbelegten Zustand des Mikrorohrs 23 radial vorstehen, wobei sie (in unbetätigtem Zustand) mit einem Neigungswinkel von über 45° gegenüber der horizontalen Axialrichtung in Richtung des Inneren 13 des Glasverteilerkastens geneigt sind.

Beim Einschieben des Mikrorohrs 23, wie in Fig. 1b gezeigt ist, werden die Krallen 35 in Axialrichtung in Richtung des Inneren 13 des Glasfaserverteilerkastens gedrückt, wodurch sie um die Schwenkachse auf Höhe der Anbindung an die äußere Hülse 9 aufschwenken. Der Anbindungsbereich der Krallelemente 35 an der Innenseite der äußeren Hülse 9 dient als Scharniergelenk, welche elastisch verformt werden, um Rückstellkräfte in die in Fig. 1a gezeigte Position aufzubringen. Wegen der oben differierten Neigung kann das Mikrorohr 23 ohne weiteres in Druckrichtung D eingeschoben werden. Die Krallen 35 verhindern aufgrund ihrer Neigung nicht die Verschiebung in Druckrichtung D, sondern laufen an der zylindrischen Außenseite des Mikrorohres 23 gleitend ab.

Erreicht das Mikrorohr 23 die gewünschte Montageposition, in der das Mikrorohr 23 vollständig durch den Anschlusskanal 5 durchgeführt ist und das Innere 13 des Glasfaserverteilungskastens erreicht, ist ein Zurückziehen des Mikrorohrs 23 in Zugrichtung Z durch die Krallen 35 blockiert. Aufgrund deren elastischen Verformung drücken sie gegen die Außenseite des Mikrorohrs 23, wobei die sich nun einstellende Neigung von weniger als 45° der plattenförmigen Krallelemente 35 gegenüber der Axialrichtung ein widerhakender Eingriff mit der Außenseite des Mikrorohres 23 einhergeht.

In der Stellung des Mikrorohrs nach Fig. 1b sitzt das Mikrorohr 23 fest und kann nicht mehr beispielsweise durch eine unerfahrene Bedienperson aus der Ausschlusseinrichtung 1 herausgezogen werden. Häufig ist im Inneren des Glasfaserverteilerkastens ein axialer Anschlag vorgesehen, damit eine Verlagerung des Mikrorohrs 23 in Druckrichtung D vermieden ist. Dabei hilft die starre Struktur des Mikrorohrs 23 aus einem Duroplast oder einem Thermoplast mit einer Wandstärke von mindestens 1 mm bis 2 mm, selbst bei Außendurchmessern von 6 mm bis 10 mm.

Sowohl die Dichtung 29 des O-Rings als auch die Feststelleinrichtung 10 mit der äußeren Hülse 9 sind an dem Tragkörper 3 befestigt, so dass sämtliche Bauelemente gemeinsam an den nicht dargestellten Glasfaserverteilerkasten angebracht und entfernt werden können. Es ist klar, dass der Feststellmechanismus 7 und der Tragkörper 3 mikrorohrindividuell an die Dimensionierung angepasst sein kann.

Ein besonderer Vorteil der Erfindung besteht darin, das Mikrorohr 23 trotz der Verhakung durch die Verankerung störungsfrei lösen zu können. Hierzu hat der Feststellmechanismus 7 die beschriebene Freigabeeinrichtung 31 zu betätigen. Bei Betätigung der Innenhülse 31 in Richtung F, die der Druckrichtung D entspricht, drückt die Freigabeinnenhülse 31 die mit dem Mikrorohr 23 in Eingriff stehenden Haken 35 radial weiter nach außen, wodurch die plattenförmigen Haken 35 annähernd in die Axialebene verschwenkt sind. Dadurch wird die Verhakung der Haken 35 mit dem Mikrorohr 23 aufgebhoben und das Mikrorohr 23 kann ungehindert in Zugrichtung C von dem Feststelleinrichtung 10 befreit werden. Aufgrund der elastischen Verformbarkeit der Verankerungselemente kann dieser Vorgang beliebig häufig wiederholt werden.

Bei der Dimensionierung der Hülsenstruktur und der Freigabeinnenhülse 31 ist insbesondere darauf zu achten, dass die Haken 35 in Radialrichtung so liegen, dass sie durch die Freigabeinnenhülse 31 betätigt werden können.

Im eingeschobenen Zustand ist aufgrund der radialen Dimensionierung ein umlaufender Dichtkontakt zwischen der Dichtung 29 und der Außenseite des Mikrorohrs 23 erreicht.

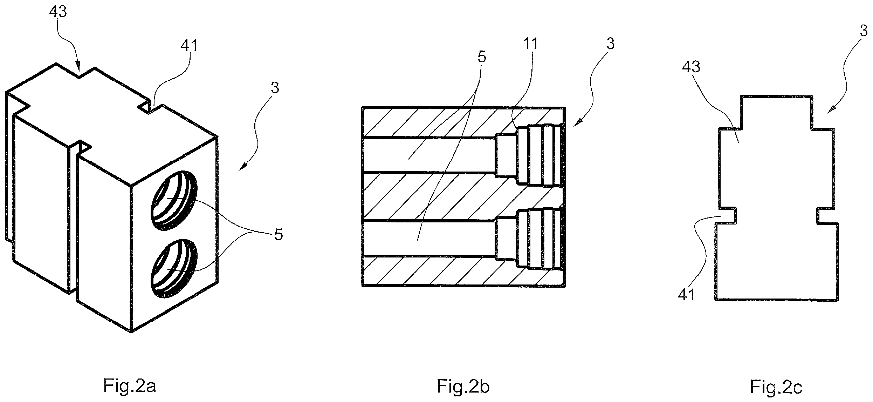

In Fig. 2a bis 2c ist ein Tragkörper mit einem Doppelanschlusskanal dargestellt.

Um ein einfaches Montieren des Tragkörpers 3 samt des Feststellmechanismus 7 und der Dichtung 29 kann der Tragkörper an dessen Körperaußenseite Profilierungen aufweisen, die das Ansetzen sowie das Erreichen der gewünschten Montageposition erleichtert. Die Profilierung ist derart ausgebildet, dass der Tragkörper 3 und somit die Anschlusseinrichtung 1 gemäß einer translatorischen Einschiebebewegung montiert werden, wobei die Einschiebebewegung rein translatorisch ausgeführt sein soll. Die Einschiebebewegungsrichtung soll vorzugsweise senkrecht zur axialen Erstreckungsrichtung der Anschlusskanäle 5 sein.

Der Tragkörper 3 hat sich gegenüberliegende, seitliche Führungsnuten 41 und kann zudem einen endseitigen Führungsabsatz 43 umfassen, um ein Einschieben in einen entsprechenden Wanddurchgang 53 in translatorischer Hochrichtung senkrecht zur Kanallängserstreckung (D, Z) zu ermöglichen. Beispielsweise kann im Bereich des Führungsabsatzes 43 auch eine O-Ring-Aufnahme ausgebildet sein, um einen fluiddichten Abschluss zwischen dem Tragkörper 3 und dem Glasfaserverteilerkasten zu erreichen.

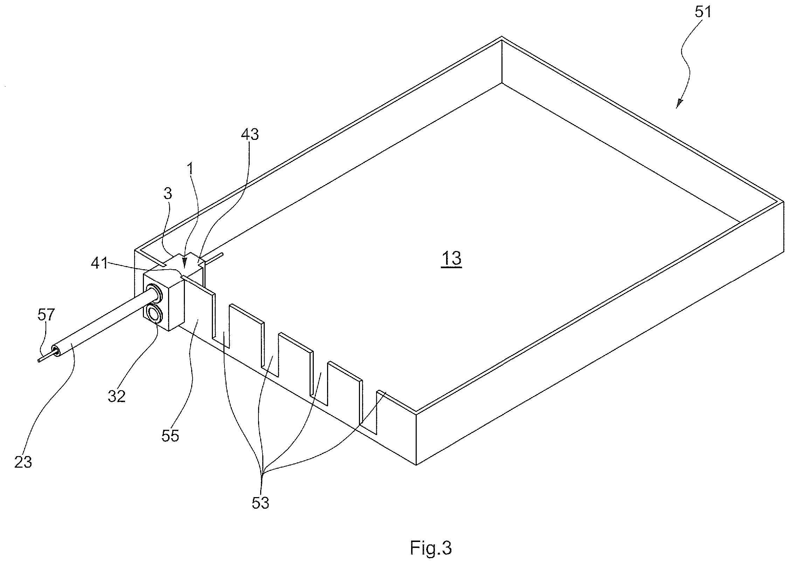

In Fig. 3 ist ein Glasfaserverteilerkasten allgemein mit der Bezugsziffer 51 versehen, ohne näher die Bauelemente des Verteilers 51 im Inneren 13 darzustellen. An einer Stirnwand 55 des Verteilerkastens 51 sind mehrere Wanddurchgänge 53 (fünf für das Ausführungsbeispiel nach Fig. 3) eingebracht, die in äquidistanten Abständen zueinander angeordnet sind. Einer der Wanddurchgänge 53 ist mit einer Anschlusseinrichtung 1 belegt, welche einen Tragkörper 3 aufweist, der in Fig. 2a bis 2c dargestellt ist. Einer der Anschlusskanäle 5 ist mit einem Mikrorohr 23 belegt, das wenigstens eine Glasfaser 57 im Rohrinneren schützt, und mit dem Feststellmechanismus 7 festgesetzt. Sollten die anderen Wanddurchgänge 53 nicht mit einer Anschlusseinrichtung 1 belegt sein, können Dichtungspfropfen (nicht dargestellt) entsprechend der Außenform des Tragkörpers 3 eingesetzt sein, die keinen Kanaldurchgang 5 aufweisen. Selbstverständlich können auch Tragkörper 3 mit Kanaldurchgängen 5 zum Ausfüllen der Wanddurchgänge 53 vorgesehen sein. Sollten die Kanaldurchgänge 5 ohne Mikrorohre 23 belegt sein, können kanalindividuelle Pfropfen eingesetzt werden. Vorzugsweise sind ein oder mehrere Glasfasern 57 in einem einzigen Fertigungsprozess gemeinsam mit dem Mikrorohr 23 extrudiert, so dass sie unmittelbar nach Entstehung des Mikrorohrs 23 bereits in deren Rohrinneren liegt.

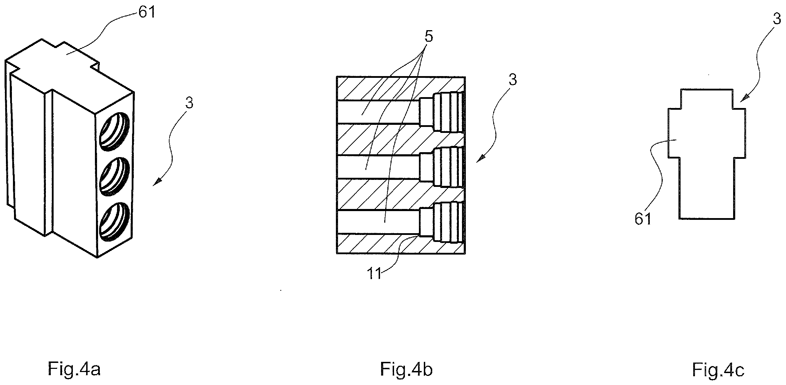

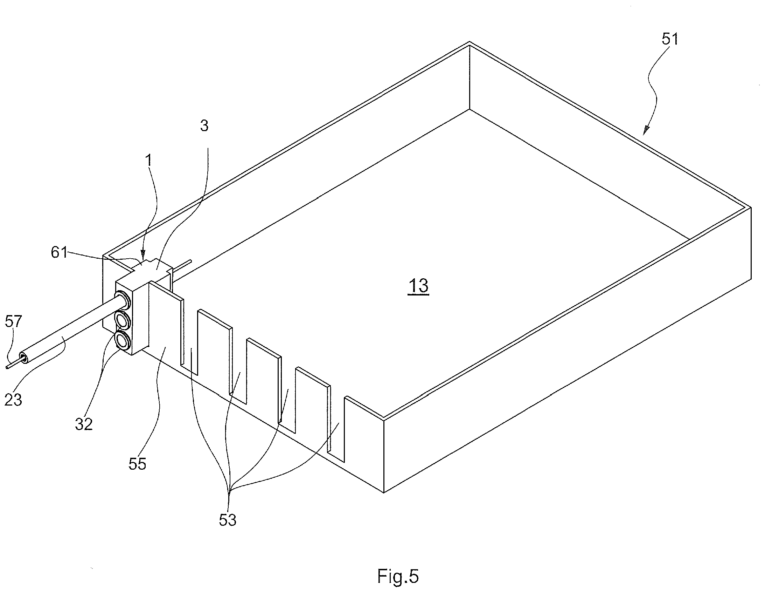

In Fig. 4a bis 4c ist eine weitere Version eines Tragkörpers 3 mit drei Anschlusskanälen 5 dargestellt. Anstatt einer Führungsnut ist ein mittiger Führungsabsatz als Führungskeilfeder 61 an der Außenseite des Tragkörpers 3 geformt. Dieser Tragkörper 3 ist bei dem Glasfaserverteilerkasten 51 gemäß Fig. 5 eingesetzt, wobei alle drei Anschlusskanäle 5 mit dem erfindungsgemäßen Feststellmechanismus 7 zur Bildung der erfindungsgemäßen Anschlusseinrichtung 1 versehen sind. Wie in Fig. 5 ersichtlich ist, ist einer der fünf Wanddurchgänge 53 mit der erfindungsgemäßen Anschlusseinrichtung 1 belegt, wobei nur ein Anschlusskanal 5 ein Mikrorohr 23 aufweist.

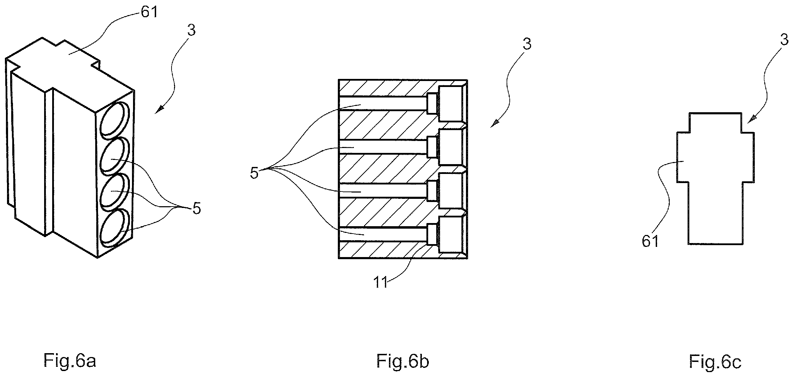

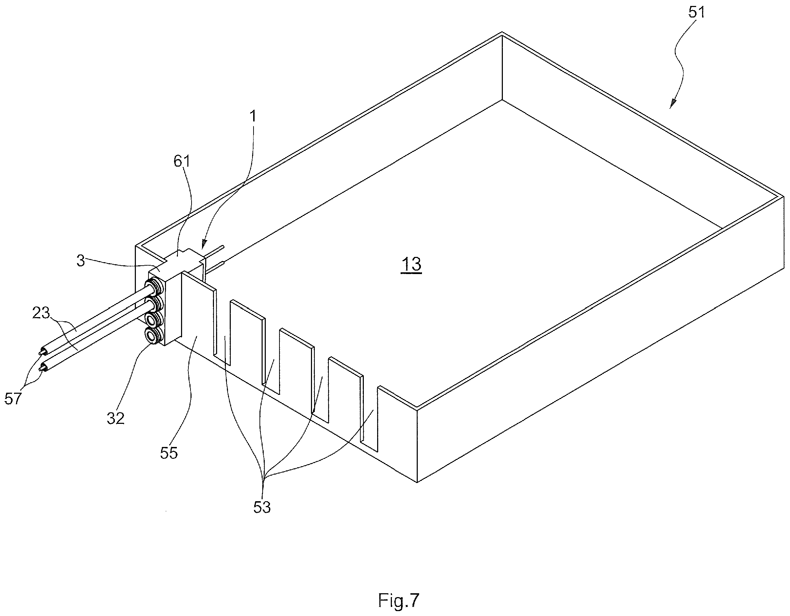

Der Tragkörper gemäß Fig. 6a bis 6c unterscheidet sich von dem gemäß Fig. 4a bis 4c dadurch, dass vier Anschlusskanäle 5 vorgesehen sind. In Fig. 7 ist die entsprechende Anschlusseinrichtung 1 mit dem Tragkörper 3 gemäß Fig. 6a bis 6c in einem der fünf Wanddurchgänge 53 eingeschoben, wobei zwei der vier Anschlusskanäle 5 der Anschlusseinrichtung 1 mit jeweils einem Mikrorohr 23 bewegt sind.

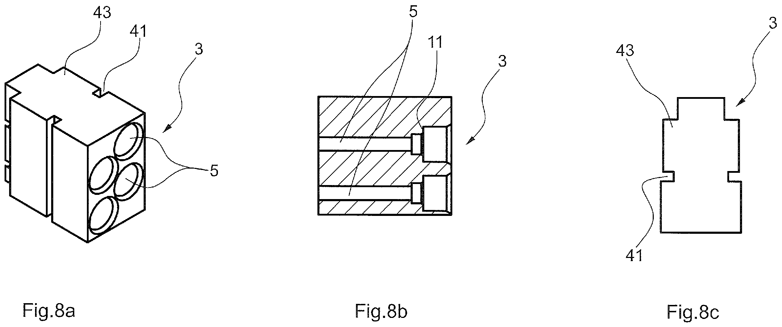

Auch der Tragkörper gemäß Fig. 8a bis 8c umfasst vier Anschlusskanäle und ist anstatt in einer im Wesentlichen quaderförmigen Struktur im Wesentlichen in einer Würfelstruktur realisiert, indem die Anschlusskanäle 5 in Höhenrichtung leicht versetzt zueinander angeordnet sind, um insbesondere bei großdimensionierten Anschlusskanälen 5 diese platzsparend in dem Tragkörper 3 unterbringen zu können.

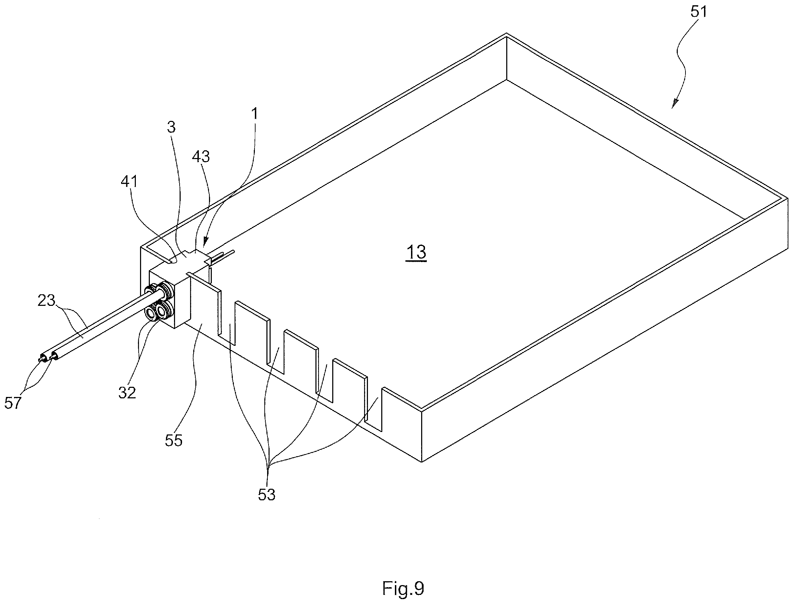

Die entsprechende Anschlusseinrichtung 1 mit dem Tragkörper gemäß Fig. 8a bis 8c ist gemäß Fig. 9 in dem schematisch dargestellten Verteilerkasten 51 eingesetzt, der ebenfalls an der Stirnseite 55 fünf Wanddurchgänge 53 aufweist. Von den vier Anschlusskanälen 5 sind zwei mit jeweils einem Mikrorohr 23 belegt.

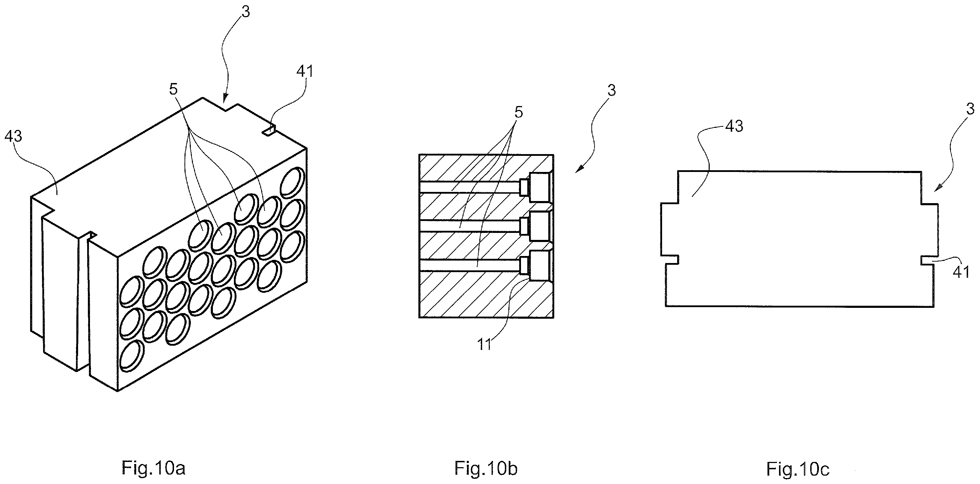

In Fig. 10a bis 10c ist ein Tragkörper 33 eines Großblocks aus Kunststoff realisiert, in dem mehr als zehn Anschlusskanäle 5 vorgesehen sind. Im Besonderen sind mehrere Anschlusskanalspalten mit drei übereinander angeordneten Anschlusskanälen 5 vorgesehen, die versetzt zueinander für eine raumsparende Anordnung positioniert sind. Der Tragkörper 3 hat wie einige der obigen Ausführungen eine Führungsnut 41 und einen Führungsabsatz 43, um ein Einschieben des Tragkörpers in den Wanddurchgang 53 des Glasfaserverteilerkastens 51 zu ermöglichen.

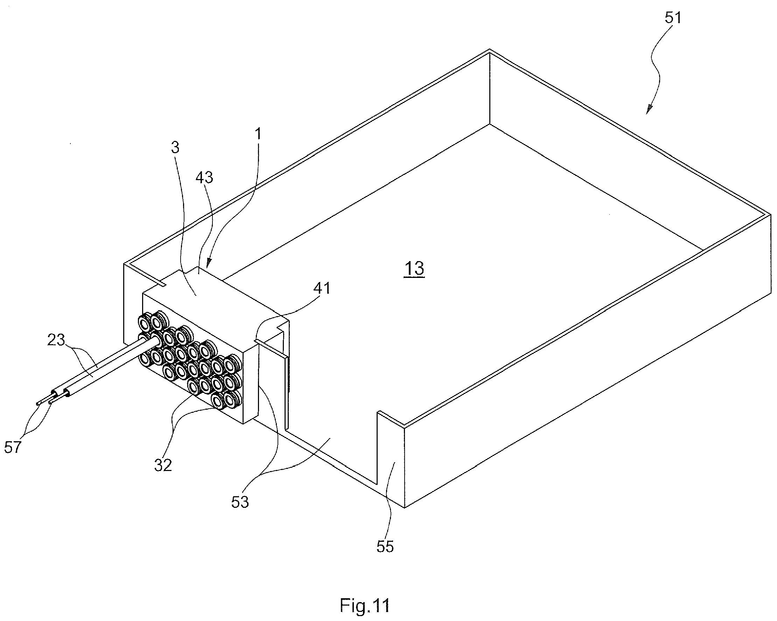

Wie in Fig. 11 ersichtlich ist, sind zwei Wanddurchgänge 53 am Glasfaserverteilerkasten 51 vorgesehen, wobei nur einer mit der Anschlusseinrichtung 1 belegt ist, die einen Tragkörper gemäß Fig. 10a bis 10c aufweist.

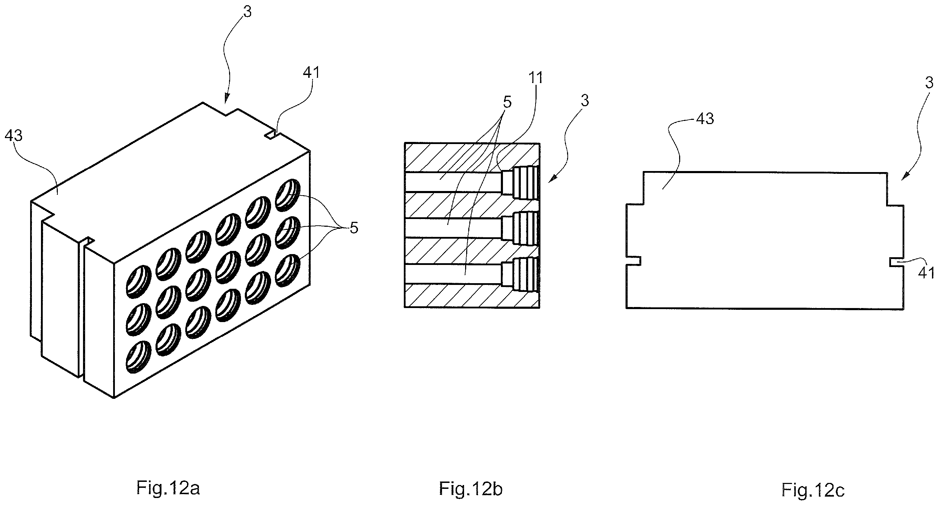

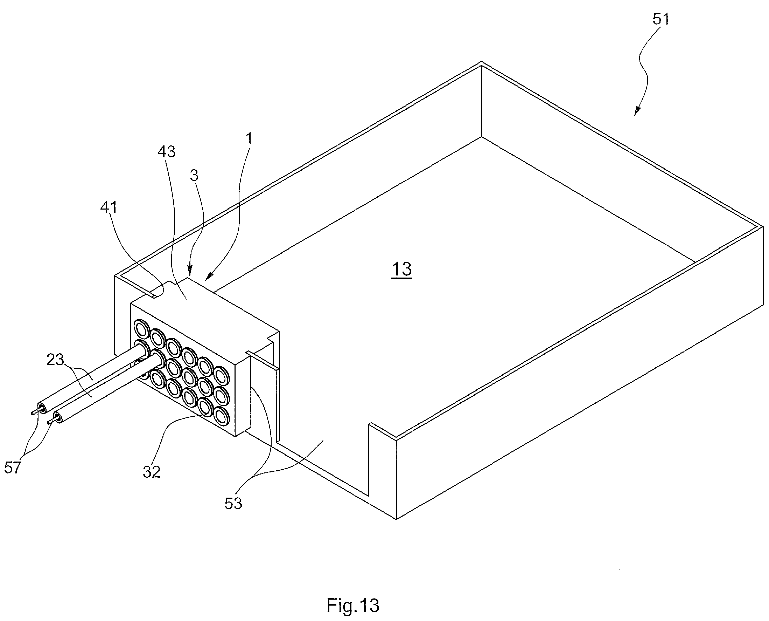

Des Weiteren ist ein Tragkörper 3 gemäß Fig. 12a bis 12c vorgesehen, der eine weitere Anordnung von mehreren Durchlasskanälen 5 in einer Reihen/Spalten-Form aufweist. Im Gegensatz zur Ausführung nach Fig. 10a bis 10c sind die Anschlusskanäle nicht zueinander versetzt sondern liegen auf gleicher Seitenhöhe des quaderförmigen, blockförmigen Tragkörpers 3. Die entsprechende Anschlusseinrichtung 1 ist im Zusammenbau mit dem Glasfaserverteilerkasten 51 in Fig. 13 dargestellt. Von der Vielzahl von Anschlusskanälen der Anschlusseinrichtung 1 sind zwei belegt. Ein Wanddurchgang 53 ist offen und kann durch einen Abschlusspfropfen abgedichtet werden.

Es sei klar, dass auch andere Glasfaserverteilerkastengestaltungen, wie in den Figuren dargestellt, eingesetzt werden können, solange sie die Möglichkeit bieten, eine einfache Montage abhängig von der Profilierung des Tragkörpers zu lassen. Auf diese Weise kann auch an bestehenden Tragkörperstrukturen die erfindungsgemäße Anschlusseinrichtung eingesetzt werden.

### Bezugszeichenliste

- 1: Anschlusseinrichtung
- 3: Tragkörper
- 5: Kanal
- 7: Feststellmechanismus
- 9: äußere Hülse
- 10: Feststelleinrichtung
- 11: Axialabsatz
- 13: Inneres des Glasfaserverteilerkastens
- 17: Stirnseite des Tragkörpers
- 21: Aufnahmerille
- 23: Mikrorohr
- 27: Montageabsatz
- 29: Dichtung
- 31: Freigabeinnenhülse
- 32: Betätigungsinnenhülse
- 33: Verankerung
- 35: Krallelemente
- 41: Führungsnut
- 43: Führungsabsatz
- 51: Glasfaserverteilerkasten
- 53: Wanddurchgang
- 55: Stirnwand
- 57: Glasfaser
- 61: Führungskeilfeder
- C: Zugrichtung
- D: Druckrichtung
- F: Verschieberichtung
- Z: axiale Zugrichtung

## Patentansprüche

1. Einrichtung (1) zum Anschließen mehrerer Glasfaserkabel aufnehmenden Kunststoff-Mikrorohre (23) an einen Glasfaserverteilerkasten (51), umfassend:
- einen Tragkörper (3), der zum Montieren und Demontieren an dem Glasfaserverteilerkasten (51) anbringbar ist und mehrere Kanäle (5) zum Aufnehmen und vollständigen Hindurchführen jeweils eines Mikrorohres (23) aufweist;
- wenigstens eine in einem Kanal (5) angeordnete Klemmeinrichtung zum zugkraftaufnehmenden Befestigen des Mikrorohres (23) an dem Tragkörper (3); und
- wenigstens eine zusätzlich in dem einen Kanal (5) als zu der wenigstens einen Klemmeinrichtung separates Bauelement angeordnete Dichtung (29) zum Abdichten des Mikrorohres (23) gegenüber dem Tragkörper (3);
wobei der Tragkörper (3), die Klemmeinrichtung und die Dichtung (29) als eine Montageeinheit an den Glasfaserverteilerkasten (51) anbringbar und abnehmbar ist;
wobei die Klemmeinrichtung einen lösbaren Feststellmechanismus (7) aufweist, der eine Verankerung (33) umfasst, welche ein Einschieben des Mikrorohres (23) ins Glasfaserverteilerkasteninnere (13) zulässt und bei Betätigung des Mikrorohres (23) in entgegengesetzter Zugrichtung aus dem Glasfaserverteilerkasten (51) heraus widerhakend mit dem Mikrorohr (23) in Eingriff kommt,
bei der die Klemmeinrichtung eine in jeweils einen Kanal (5) des Tragkörpers (3) eingesetzte Hülsenstruktur (15) aufweist, an deren Innenseite die Verankerung (33) vorgesehen ist, die ein Einschieben des jeweils Mikrorohres (23) nachgebend zulässt und mehrere elastisch verformbare, radial nach innen ragende Krallen (35) aufweist, welche bei einer Betrachtung radial nach innen ins Innere (13) des Glasfaserverteilerkastens (51) geneigt sind, um bei einer Zugbewegung des in die Klemmeinrichtung eingeschobenen Mikrorohres (23) sich in radialer Richtung aufzustellen.

2. Einrichtung (1) nach Anspruch 1, bei der eine Außenseite des Tragkörpers (3) mit einem Montageprofil zum translatorischen Einschieben des Tragkörpers (3) längs einer entsprechend geformten Wandöffnung des Glasfaserverteilerkastens (51) geformt ist, in die ein Wandrand des Glasfaserverteilerkastens (51) gleitend eingreifen kann, und das Montageprofil eine Montageeinschieberichtung des Tragkörpers gegenüber dem Glasfaserverteilerkasten (51) derart festlegt, dass die Montageeinschieberichtung quer zur Kanallängsrichtung liegt.

3. Einrichtung (1) nach Anspruch 2, bei der zusätzlich zu dem Montageprofil zum translatorischen Einschieben des Tragkörpers (3) relativ zum Glasfaserverteilerkasten (51) in eine Montageendposition des Tragkörpers (3) ein Dichtungs-Aufnahmeprofil an der Außenseite des Tragkörpers (3) geformt ist, in dem eine Außendichtung zum Abdichten des Kontaktbereichs zwischen dem Glasfaserverteilerkasten (51) und dem Tragkörper (3) angeordnet ist, wobei die Dichtung (29) erst dann einen umlaufenden Dichtungskontakt mit dem Glasfaserverteilerkasten (51) bildet, wenn der Tragkörper (3) in die Montagendposition eingeschoben ist.

4. Einrichtung (1) nach Anspruch 2 oder 3, bei der der Tragkörper (3) im Wesentlichen eine Quaderblockform aufweist, die parallel sich gegenüberliegende Seitenflächen aufweist, in welche das Montageprofil und gegebenenfalls das Dichtungs-Aufnahmeprofil ausgebildet sind.

5. Einrichtung (1) nach einem der vorstehenden Ansprüche, bei der die Klemmeinrichtung jeweils in einem Kanal (5) verpresst ist.

6. Einrichtung (1) nach Anspruch 1 oder Anspruch 5, bei der der lösbare Feststellenmechanismus (7) zudem eine Freigabeeinrichtung aufweist, die in einem Betätigungszustand das Mikrorohr (23) von dem Feststellmechanismus (7) für ein ungehindertes Verschieben des Mikrorohres (23) freigibt, wobei die Freigabeeinrichtung eine gegenüber einer Hülsenstruktur der Feststelleinrichtung teleskopartig stellbares Betätigungsglied umfasst, welches bei axialen Verschieben im Betätigungszustand derart auf die Feststelleinrichtung einwirkt, dass deren Eingriff mit dem Mikrorohr (23) zu dessen ungehinderten axialen Verschieben freigegeben ist.

7. Einrichtung (1) nach Anspruch 6, bei der das Betätigungsglied in der Hülsenstruktur (15) der Feststelleinrichtung eine Innenhülse ist, welche in axialer Kanalrichtung zur Außenseite des Glasfaserverteilerkastens (51) durch die mehreren elastisch verformbaren Krallen (35) der Feststelleinrichtung vorgespannt ist, sodass die Innenhülse gegen einen Axialanschlag der Hülsenstruktur (15) im unbetätigten Zustand anliegt.

8. Glasfaserverteilerkasten (51) mit einem geschlossenen Gehäuse und einem in einer Gehäusewand angeordneten Durchgang (53), in dem eine nach einem der vorstehenden Ansprüche ausgebildete Einrichtung (1) lösbar eingesetzt ist.

## Claims

1. A device (1) for connecting a plurality of plastic microtubes (23) accommodating glass fiber cables to a glass fiber distribution box (51), comprising:
- a support body (3) which can be attached to the glass fiber distribution box (51) for mounting and dismounting and has a plurality of channels (5) for receiving and completely guiding through a respective microtube (23);
- at least one clamping device arranged in a channel (5) for a tensile force absorbing fastening of the microtube (23) to the support body (3); and
- at least one seal (29) additionally arranged in the one channel (5) as a component separate from the at least one clamping device for sealing the microtube (23) with respect to the support body (3);
wherein the support body (3), the clamping device and the seal (29) can be attached to the glass fiber distribution box (51) as a mounting unit and can be removed;
wherein the clamping device has a releasable locking mechanism (7) which comprises an anchorage (33) which allows the microtube (23) to be inserted into the glass fiber distribution box interior (13) and, when the microtube (23) is actuated in the opposite pulling direction out of the glass fiber distribution box (51), engages with the microtube (23) in a barbed hook manner,
wherein the clamping device has a sleeve structure (15) inserted into a respective channel (5) of the support body (3), on the inner side of which the anchorage (33) is provided which allows the respective microtube (23) to be inserted in a yielding manner and has a plurality of elastically deformable, radially inwardly projecting claws (35) which, when viewed, are inclined radially inwards into the interior (13) of the glass fiber distribution box (51) in order to stand up in a radial direction during a pulling movement of the microtube (23) inserted into the clamping device.

2. The device (1) according to claim 1, wherein an outer side of the support body (3) is formed with a mounting profile for the translational insertion of the support body (3) along a correspondingly formed wall opening of the glass fiber distribution box (51), into which wall opening a wall edge of the glass fiber distribution box (51) can engage in a sliding manner, and the mounting profile defines a mounting insertion direction of the support body with respect to the glass fiber distribution box (51) in such a manner that the mounting insertion direction lies transversely with respect to the channel longitudinal direction.

3. The device (1) according to claim 2, wherein, in addition to the mounting profile for the translational insertion of the support body (3) relative to the glass fiber distribution box (51) into a mounting end position of the support body (3), a seal receiving profile is formed on the outer side of the support body (3), in which seal receiving profile an outer seal for sealing the contact region between the glass fiber distribution box (51) and the support body (3) is arranged, wherein the seal (29) only forms a circumferential seal contact with the glass fiber distribution box (51) when the support body (3) is inserted into the mounting end position.

4. The device (1) according to claim 2 or 3, wherein the support body (3) substantially has a cuboid block shape which has side surfaces lying opposite one another in parallel, in which side surfaces the mounting profile and optionally the seal receiving profile are formed.

5. The device (1) according to one of the preceding claims, wherein the clamping device is pressed into a channel (5) in each case.

6. The device (1) according to claim 1 or claim 5, wherein the releasable locking mechanism (7) additionally has a release device which, in an actuated state, releases the microtube (23) from the locking mechanism (7) for an unimpeded displacement of the microtube (23), wherein the release device comprises an actuating member which can be set telescopically with respect to a sleeve structure of the locking device and which, during axial displacement in the actuated state, acts on the locking device in such a manner that the engagement thereof with the microtube (23) is released for the unimpeded axial displacement thereof.

7. The device (1) according to claim 6, wherein the actuating member in the sleeve structure (15) of the locking device is an inner sleeve which is pretensioned in the axial channel direction towards the outside of the glass fiber distribution box (51) by the plurality of elastically deformable claws (35) of the locking device, so that the inner sleeve bears against an axial stop of the sleeve structure (15) in the non-actuated state.

8. A glass fiber distribution box (51) having a closed housing and a passage (53) arranged in a housing wall, into which passage a device (1) formed according to one of the preceding claims is releasably inserted.

## Revendications

1. Dispositif (1) de raccordement de plusieurs microtubes en matière plastique (23) logeant des câbles à fibres optiques à un coffret de distribution de fibres optiques (51), comprenant
- un corps de support (3) qui peut être placé pour le montage et le démontage sur le coffret de distribution de fibres optiques (51) et comporte plusieurs conduits (5) pour recevoir et passer complètement à chaque fois un microtube (23) à travers,
- au moins un système de serrage disposé dans un conduit (5) pour la fixation par réception de la force de traction du microtube (23) sur le corps de support (3), et
- au moins un joint d'étanchéité (29) disposé en plus dans un conduit (5) en tant que composant séparé au moins du système de serrage pour étanchéifier le microtube (23) par rapport au corps de support (3),
sachant que le corps de support (3), le système de serrage et le joint d'étanchéité (29) peuvent être mis en place et enlevés en tant qu'unité de montage sur le coffret de distribution de fibres optiques (51),
sachant que le système de serrage comporte un mécanisme de blocage amovible (7), qui comprend un ancrage (33), lequel permet une introduction du microtube (23) à l'intérieur du coffret de distribution de fibres optiques (13) et vient en prise avec le microtube (23) se crochetant à partir du coffret de distribution de fibres optiques (51) lors de l'actionnement du microtube (23) dans la direction de traction opposée,
pour lequel le système de serrage comporte une structure de manchon (15) insérée à chaque fois dans un conduit (5) du corps de support (3) sur le côté intérieur de laquelle l'ancrage (33) est prévu, qui permet en fléchissant une introduction du microtube (23) respectif et comporte plusieurs griffes (35) élastiquement déformables, dépassant radialement vers l'intérieur, lesquelles, en y regardant radialement vers l'intérieur, sont inclinées dans l'intérieur (13) du coffret de distribution de fibres optiques (51), pour s'installer en direction radiale lors d'un mouvement de traction du microtube (23) introduit dans la direction de serrage.

2. Dispositif (1) selon la revendication 1, pour lequel un côté extérieur du corps de support (3) est formé avec un profil de montage pour l'introduction translatoire du corps de support (3) le long d'une ouverture de paroi formée en conséquence du coffret de distribution de fibres optiques (51), dans laquelle un bord de paroi du coffret de distribution de fibres optiques (51) peut venir en prise en glissant et le profil de montage définit une direction d'introduction de montage du corps de support par rapport au coffret de distribution de fibres optiques (51) de telle manière que la direction d'introduction de montage se situe transversalement à la direction longitudinale de conduit.

3. Dispositif (1) selon la revendication 2, pour lequel un profil de logement de joint d'étanchéité est formé sur le côté extérieur du corps de support (3) en plus du profil de montage pour l'introduction translatoire du corps de support (3) par rapport au coffret de distribution de fibres optiques (51) dans une position finale de montage du corps de support (3), dans lequel est disposé un joint d'étanchéité extérieur pour étanchéifier la zone de contact entre le coffret de distribution de fibre optique (51) et le corps de support (3), sachant que le joint d'étanchéité (29) ne forme ensuite un contact d'étanchéité périphérique avec le coffret de distribution de fibres optiques (51) que lorsque le corps de support (3) est introduit dans la position finale de montage.

4. Dispositif (1) selon la revendication 2 ou 3, pour lequel le corps de support (3) comporte pour l'essentiel une forme de bloc parallélépipédique, qui comporte des surfaces latérales s'opposant parallèlement, dans lesquelles sont constitués le profilé de montage et le cas échéant le profilé de logement de joint d'étanchéité.

5. Dispositif (1) selon l'une quelconque des revendications précédentes, pour lequel le dispositif de serrage est comprimé à chaque fois dans un conduit (5).

6. Dispositif (1) selon la revendication 1 ou la revendication 5, pour lequel le mécanisme de blocage (7) amovible comporte en plus un système de libération, qui libère dans un état d'actionnement le microtube (23) du mécanisme de blocage (7) pour un déplacement libre du microtube (23), sachant que le dispositif de libération comprend un organe d'actionnement positionnable télescopiquement par rapport à une structure de manchon du dispositif de blocage, lequel agit lors du déplacement axial à l'état d'actionnement sur le dispositif de blocage de telle manière que l'engrènement de celui-ci avec le microtube (23) est libéré pour le déplacement axial libre de celui-ci.

7. Dispositif (1) selon la revendication 6, pour lequel l'organe d'actionnement dans la structure de manchon (15) du système de blocage est un manchon intérieur, lequel est précontraint en direction de conduit axiale vers le côté extérieur du coffret de distribution de fibres optiques (51) par plusieurs griffes (35) élastiquement déformables du système de blocage de telle sorte que le manchon intérieur vient s'appliquer à l'état non actionné contre une butée axiale de la structure de manchon (15).

8. Coffret de distribution de fibres optiques (51) avec un boîtier fermé et un passage (53) disposé dans une paroi de boîtier, dans lequel un dispositif (1) constitué selon l'une quelconque des revendications précédentes est inséré de façon amovible.
